# FASCICULE DE BREVET EUROPEEN

(11) **EP 3 027 961 B1**
(45) Date de publication et mention de la délivrance du brevet: **11.05.2022**
(21) Numéro de dépôt: 14744343.6
(22) Date de dépôt: 28.07.2014
(51) Int. Cl.: B60Q 1/14, F21S 41/148, F21S 41/663, F21S 41/675

(54) **SYSTÈME D'ÉCLAIRAGE POUR VÉHICULE AUTOMOBILE**
BELEUCHTUNGSSYSTEM FÜR EIN KRAFTFAHRZEUG
LIGHTING SYSTEM FOR A MOTOR VEHICLE

(30) Priorité: 02.08.2013 FR 1357746
(43) Date de publication de la demande: 08.06.2016
(73) Titulaire: Valeo Vision, 93012 Bobigny Cedex (FR)
(72) Inventeur: ALBOU, Pierre, F-75013 Paris (FR); SANCHEZ, Vanesa, F-92270 Bois Colombes (FR); ASLAN, Arzu, F-93260 LES LILAS (FR)
(74) Mandataire: Valeo Visibility
(86) Numéro de dépôt international: PCT/EP2014/066177
(87) Numéro de publication internationale: WO 2015/014793

(56) Documents cités:
- EP-A1- 2 597 360
- EP-A1- 2 607 165
- EP-A2- 2 060 442
- EP-A2- 2 415 638
- EP-A2- 2 423 567
- JP-A- 2013 107 590
- US-A1- 2013 169 154

## Description

La présente invention concerne de manière générale la génération de faisceaux d'éclairage, notamment pour les véhicules automobiles.

Dans ce domaine, on connait des modules d'éclairage ou projecteurs, parmi lesquels on trouve traditionnellement essentiellement :
- des feux de croisement, ou codes, de portée sur la route avoisinant les 70 mètres, qui sont utilisés essentiellement la nuit, et dont la répartition du faisceau lumineux est telle qu'elle permet de ne pas éblouir le conducteur d'un véhicule croisé. Typiquement, ce faisceau présente une coupure en partie supérieure avec une portion horizontale, préférentiellement environ 0,57 degrés en dessous de l'horizon, afin de ne pas éclairer la zone dans laquelle devrait se trouver le conducteur d'un véhicule arrivant en sens inverse ;
- des feux de route longue portée, dont la zone de portée sur la route peut atteindre 600 mètres, et qui doivent être éteints lorsque l'on croise ou suit un autre véhicule afin de ne pas éblouir son conducteur ;
- des feux antibrouillard.

Plus récemment, on a développé des modes d'éclairage partiel consistant à former un faisceau sélectif présentant des zones sombres aux endroits où se trouvent des véhicules ou personnes à ne pas éblouir. L'éclairage de la route est amélioré relativement aux seuls feux codes, tout en évitant la gêne d'une luminosité excessive pour les conducteurs croisés ou suivis, gêne qu'occasionneraient par exemple des feux de route longue portée traditionnels. Une telle fonction d'éclairage sélectif est encore dénommée ADB (acronyme de l'anglais *Adaptative Driving Beam* que l'on peut traduire par faisceau feux de route adaptatif).

Différentes solutions ont déjà été envisagées pour former un tel faisceau ADB :
On connait notamment du document EP 2 415 638, au nom de la Demanderesse, un ensemble de deux unités optiques, chacune étant apte à former un faisceau complémentaire produisant, dans un plan perpendiculaire à l'axe optique du faisceau complémentaire, une zone d'éclairement en forme de « voile de navire », c'est-à-dire présentant des premier et deuxième bords de coupure faisant entre eux sensiblement un angle droit, et s'étendant majoritairement dans un quart de plan délimité par les deux bords de coupure. L'ensemble de deux unités optiques est agencé pour générer une zone non éblouissante dans un faisceau lumineux, la zone étant délimitée de part et d'autre par les faisceaux complémentaires respectifs des unités optiques. Un inconvénient lié à cette solution réside dans le fait qu'il est nécessaire de prévoir un mécanisme d'orientation pour chaque unité optique, afin d'être en mesure de déplacer la zone non éblouissante, et/ou de modifier la largeur de cette zone, pour suivre le mouvement d'un véhicule tiers dont on souhaite éviter l'éblouissement. Ces mécanismes d'orientation sont coûteux, encombrants, et peuvent poser des problèmes de fiabilité.

Une autre solution décrite dans le document EP 2 060 442, également au nom de la Demanderesse, consiste à créer un faisceau complémentaire composé de plusieurs nappes élémentaires en partie superposées, chaque nappe élémentaire étant limitée du côté intérieur par un bord de coupure sensiblement vertical (forme des nappes élémentaires dite « en demi-lune »), les nappes élémentaires étant agencées de façon à ce que les bords de coupure des différentes nappes élémentaires soient décalés angulairement en s'écartant de l'axe optique. Une source lumineuse est associée à chaque nappe élémentaire et un moyen de commande est prévu pour éteindre ou allumer chaque nappe élémentaire de façon sélective, en fonction des conditions de circulation, afin de créer une bande non éclairée pouvant être comprise entre deux zones éclairées. Il est ainsi possible de faire varier la taille et/ou la position angulaire de la bande non éclairée uniquement par extinction et/ou allumage des sources lumineuse, sans qu'un quelconque mécanisme d'orientation soit nécessaire. Néanmoins, le fait que les nappes élémentaires aient une forme en demi-lune pose des problèmes. Ainsi :
- lorsque la fonction ADB est activée, c'est-à-dire lors de l'extinction d'une bande conformément aux principes du document EP 2 060 442, cela va générer des variations d'intensité en-dessous de l'horizontale, et en particulier en-dessous de la coupure horizontale du feu code, ce qui est non seulement inutile, car cette zone placée sous la coupure horizontale n'est pas une zone critique pour le véhicule tiers, mais peut s'avérer gênant.
- lorsque la fonction ADB n'est pas activée, mais que le faisceau complémentaire au feu code est allumé pour une fonction route, le faisceau global obtenu n'est pas homogène. En particulier, toujours du fait de la forme en demi-lune des nappes élémentaires qui se superposent en partie entre elles, et qui se superposent également avec le feu code en dessous de la coupure horizontale, l'éclairage total obtenu par terre est trop important.

Par ailleurs, aucune des solutions précédentes ne permet d'obtenir un faisceau route homogène quelle que soit la distance au-devant du véhicule à laquelle on se place.

Le document US 2013 169154 A1 décrit un phare de véhicule automobile comprenant plusieurs modules ayant chacun cinq LED. Chacune des LED forme une nappe rectangulaire, les nappes étant décalées et partiellement superposées.

La présente invention a pour but de proposer des solutions d'amélioration en termes d'homogénéité quant à la génération d'un faisceau complémentaire à un faisceau de feu code pour une fonctionnalité ADB et/ou une fonctionnalité de feu route.

Ainsi, un premier objet de l'invention concerne un système d'éclairage tel que défini dans la revendication 1.

Grâce à un tel système, il n'y a plus de lumière traînante en dessous de la coupure horizontale, et en particulier par terre, lors de l'utilisation du système en feu de route, ni de bande sombre en dessous de la coupure horizontale lors de l'utilisation du système en fonction ADB. En outre, la précision de la fonctionnalité ADB est améliorée puisque les bandes non éclairées obtenues ont une largeur minimum correspondant au deuxième pas.

Selon d'autres caractéristiques additionnelles :
- chaque premier et deuxième faisceaux lumineux peut avantageusement produire en outre, dans le plan perpendiculaire à l'axe optique, une nappe lumineuse secondaire similaire à la nappe lumineuse primaire, mais dont les nappes élémentaires secondaires s'étendent, pour un même faisceau, selon une orientation opposée à celle de la nappe lumineuse primaire. Chaque nappe élémentaire secondaire du premier, respectivement deuxième, faisceau lumineux est de préférence positionnée selon une orientation inversée par rapport à une nappe élémentaire primaire du premier, respectivement deuxième, faisceau lumineux de manière à ce que leurs premiers bords de coupure soient sensiblement alignés selon ladite direction sensiblement horizontale et leurs deuxièmes bords de coupure soient sensiblement alignés selon une direction sensiblement verticale. Grâce à cet agencement, les faisceaux obtenus au niveau de chaque projecteur, de même que le faisceau global lorsque toutes les sources lumineuses sont allumées (fonction feu de route), sont très homogènes, et ce, quelle que soit la distance à laquelle on se place ;
- le deuxième pas est par exemple sensiblement égal à la moitié du premier pas, soit 1,5 degrés si le premier pas est fixé à 3 degrés ;
- à titre d'exemple, chaque nappe élémentaire peut être produite par un dispositif optique comprenant: un réflecteur agencé pour générer un faisceau lumineux réfléchi à partir des rayons lumineux issus de la source lumineuse associée à la nappe élémentaire, une paroi de cache pourvue d'une bordure située sur le chemin du faisceau lumineux réfléchi et configurée pour former le deuxième bord de coupure, le réflecteur étant agencé pour générer le premier bord de coupure. La paroi de cache est de préférence réfléchissante, ce qui permet d'améliorer le rendement lumineux. Le réflecteur présente de préférence une section horizontale sensiblement elliptique, et la source lumineuse associée est placée dans le plan de la paroi de cache au niveau d'un premier foyer de la section horizontale sensiblement elliptique ;
- en variante, chaque nappe élémentaire peut être produite par un dispositif d'émission de lumière comportant : un réflecteur, de préférence de forme ellipsoïdale, une surface de cache agencée pour créer une coupure de direction sensiblement verticale dans le faisceau lumineux généré par le dispositif d'émission de lumière, une autre surface de cache agencée pour créer une coupure de direction sensiblement horizontale dans le faisceau lumineux généré par le dispositif d'émission de lumière, et un élément optique, typiquement une lentille, comprenant un premier foyer et/ou une première ligne focale situé à l'intersection des bords de coupure des deux caches, et recevant la lumière réfléchie par le réflecteur.
- selon une autre variante, chaque nappe élémentaire peut être produite par une unité optique comportant un réflecteur apte à produire les deux bords de coupures sensiblement orthogonaux par imagerie directe de la source lumineuse, c'est-à-dire par alignement des images de la source lumineuse formées en chaque point du réflecteur ;
- les nappes élémentaires d'une même nappe lumineuse peuvent avoir soit sensiblement la même taille, soit, selon la direction horizontale, une étendue angulaire variable en fonction de leur position dans la nappe lumineuse. En particulier, l'étendue angulaire des nappes élémentaires d'une même nappe lumineuse croît de préférence avec la distance séparant le premier bord de coupure verticale associé à chaque nappe élémentaire et le bord de coupure verticale de ladite même nappe lumineuse lorsque toutes les sources lumineuses associées sont allumées;
- les sources lumineuses sont des diodes électroluminescentes.

L'invention nécessite deux projecteurs, chacun des projecteurs étant un projecteur d'éclairage, pour véhicule automobile, apte à projeter un faisceau lumineux, le faisceau lumineux produisant, dans un plan perpendiculaire à l'axe optique, au moins une nappe lumineuse primaire comportant une pluralité de nappes élémentaires primaires, chaque nappe élémentaire primaire étant générée par une source lumineuse apte à être allumée ou éteinte de façon sélective, caractérisé en ce que chaque nappe élémentaire primaire comprend un premier et un deuxième bords de coupure, et s'étend majoritairement dans un quart de plan délimité par le premier et le deuxième bords de coupure, et en ce que les nappes élémentaires primaires sont en partie superposées et agencées les unes par rapport aux autres selon une même orientation de manière à ce que leurs premiers bords de coupure soient sensiblement alignés selon une direction sensiblement horizontale et leurs deuxièmes bords de coupure soient décalés angulairement deux à deux d'un premier pas selon ladite direction sensiblement horizontale.

Dans un mode de réalisation particulièrement avantageux, le faisceau lumineux produit également, dans le plan perpendiculaire à l'axe optique, une nappe lumineuse secondaire similaire à la nappe lumineuse primaire, chaque nappe élémentaire secondaire de la nappe lumineuse secondaire étant positionnée selon une orientation inversée par rapport à une nappe élémentaire primaire de manière à ce que leurs premiers bords de coupure soient sensiblement alignés selon ladite direction sensiblement horizontale et leurs deuxièmes bords de coupure soient sensiblement alignés selon une direction sensiblement verticale.

L'invention et les avantages qu'elle procure seront mieux compris à la lecture de la description détaillée qui va suivre d'exemples de mise en œuvre non limitatifs de l'invention, faite en référence aux figures annexées, dans lesquelles :
- les figures 1a et 1b illustrent, schématiquement et partiellement, une scène de route et la mise en œuvre d'un exemple de l'invention, respectivement en mode feu de route et en mode ADB ;
- la figure 2 illustre l'allure générale de nappes lumineuses obtenues pour les faisceaux complémentaires d'un système selon un premier mode de réalisation de l'invention ;
- la figure 3 représente un exemple de dispositif optique apte à générer une nappe lumineuse élémentaire en voile de navire ;
- la figure 4 illustre l'allure générale de nappes lumineuses obtenues pour les faisceaux complémentaires d'un système selon une variante du système selon le premier mode de réalisation de l'invention ;
- la figure 5 illustre l'allure générale de nappes lumineuses obtenues pour les faisceaux complémentaires d'un système selon un deuxième mode de réalisation de l'invention ;
- la figure 6 illustre l'allure générale des nappes lumineuses obtenues pour les faisceaux complémentaires d'un système selon une variante du système selon le deuxième mode de réalisation de l'invention.

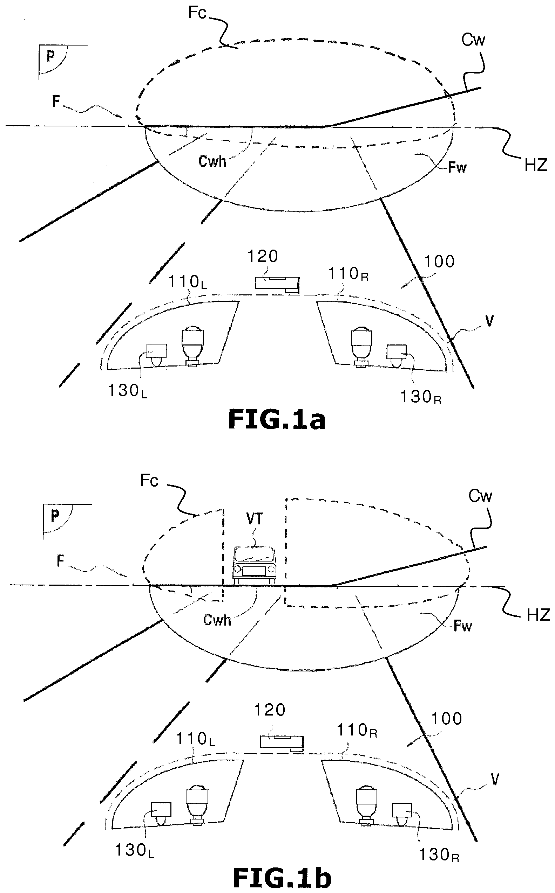

On a représenté sur les figures 1a et 1b une scène de route mettant en œuvre un exemple de l'invention, se rapportant à une conduite de véhicule de type « trafic à droite ». Les principes qui vont être expliqués dans la suite sont bien entendu applicables pour une conduite de véhicule de type « trafic à gauche ».

Ces figures illustrent plus précisément, à titre d'exemple non limitatif, un système d'éclairage 100 pour un véhicule automobile V, permettant de réaliser la fonction ADB et la fonction feu de route, le système comportant :
- un premier projecteur 110_{R} agencé pour un montage côté droit du véhicule V,
- un deuxième projecteur 110_{L} agencé pour un montage côté gauche du véhicule V.

Le véhicule V est équipé d'une caméra 120, par exemple placée à l'avant, et qui permet de détecter la présence d'un véhicule tiers VT circulant en sens inverse sur la voie opposée (gauche) ainsi que sa position (verticale et horizontale).

Sur les deux figures, on a représenté la trace du faisceau lumineux global F que l'on obtient dans un plan P perpendiculaire à l'axe optique général du système:
- d'une part, lorsqu'aucun véhicule tiers n'est présent sur la route (cas de la figure 1a);
- d'autre part, lorsqu'un véhicule tiers VT arrive en face du véhicule V (cas de la figure 1b).

Dans les deux cas de figures, le faisceau global F résultant correspond à la superposition d'un faisceau Fw à coupure oblique de type code, avec un bord de coupure Cwh horizontal et un bord de coupure Cw incliné, par exemple de 15°, par rapport à l'horizontale HZ, et d'un faisceau complémentaire Fc dont la forme de la trace sur le plan P est représentée en pointillée.

Dans le cas de la figure 1a, la forme du faisceau complémentaire Fc permet de donner un faisceau F de type route. Comme cela sera expliqué plus en détail par la suite, la partie inférieure de ce faisceau complémentaire est sensiblement alignée avec l'horizontale HZ, mais de préférence légèrement en dessous.

De manière différente, dès lors que la caméra 120 a détecté la présence d'un véhicule tiers VT, la forme du faisceau complémentaire Fc est modifiée pour permettre la génération d'une zone sombre ZS dans laquelle se trouve le véhicule tiers VT venant en sens inverse, de manière à éviter l'éblouissement du conducteur du véhicule VT tout en éclairant la route dans sa plus grande surface.

Conformément à l'invention, le faisceau complémentaire Fc correspond à la superposition d'un premier faisceau lumineux généré par un dispositif optique 130_{L} intégré dans le projecteur gauche 110_{L} et d'un deuxième faisceau lumineux généré par un dispositif optique 130_{R} intégré dans le projecteur droit 110_{L}, ces premier et deuxième faisceaux pouvant être obtenus de différentes manières qui vont à présent être détaillées.

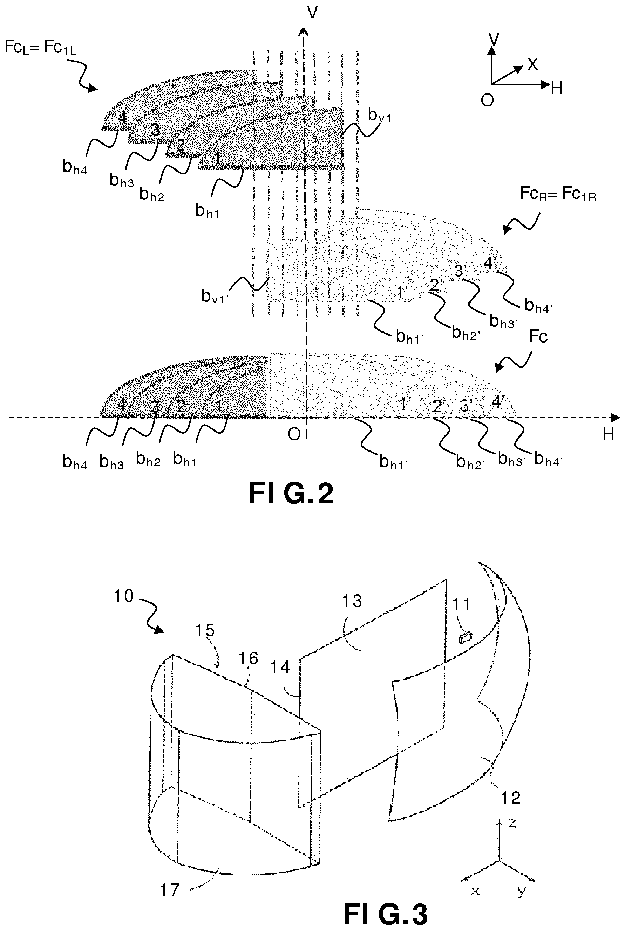

Conformément à un premier mode de réalisation, et en référence à la figure 2, on a représenté les traces obtenues sur un plan P d'axes orthogonaux OV et OH, perpendiculaire à l'axe optique OX pour un premier faisceau lumineux complémentaire Fc_{L} généré au niveau du projecteur gauche 110_{L}, et pour un deuxième faisceau lumineux complémentaire Fc_{R} généré au niveau du projecteur droit 110_{R}. Pour permettre une bonne compréhension de la constitution de ces traces, les différents éléments ont été volontairement décalés selon l'axe OV. En réalité, tous les éléments sont superposés suivant un même étalement vertical, de manière à créer un faisceau total Fc de part et d'autre d'un axe optique OX, dont la projection sur le plan P est représentée sur la dernière ligne de la figure 2.

Dans l'exemple représenté, chaque premier et deuxième faisceaux complémentaires Fc_{L}, Fc_{R} produit, dans le plan P, une nappe lumineuse primaire Fc_{1L}, Fc_{1R}, la nappe lumineuse primaire Fc_{1L} du premier faisceau Fc_{L} s'étendant majoritairement d'un premier côté de l'axe optique OX (dans l'exemple, vers la gauche) et la nappe lumineuse primaire Fc_{1R} du deuxième faisceau Fc_{R} s'étendant majoritairement d'un deuxième côté de l'axe optique OX opposé au premier côté (dans l'exemple, vers la droite).

La nappe lumineuse primaire Fc_{1L} projetée sur la gauche comporte une pluralité de nappes élémentaires primaires, dans l'exemple quatre nappes élémentaires sensiblement identiques numérotées de 1 à 4. De même, la nappe lumineuse primaire Fc_{1R} projetée sur la droite comporte une pluralité de nappes élémentaires primaires, dans l'exemple quatre nappes élémentaires sensiblement identiques numérotées de 1' à 4'.

Chaque nappe élémentaire numérotée i, l'entier i allant de 1 à 4, présente un profil en « voile de navire », délimité par un premier bord de coupure bₕᵢ et un deuxième bord de coupure bᵥᵢ formant entre eux un angle sensiblement compris entre 70° et 110°, de préférence un angle droit. Chaque nappe élémentaire numérotée i s'étend ainsi majoritairement dans un quart de plan délimité par son premier et son deuxième bords de coupure bₕᵢ et bᵥᵢ.

Les nappes élémentaires primaires 1 à 4 (respectivement 1' à 4') de la nappe lumineuse primaire Fc_{1L} (respectivement Fc_{1R}) sont en partie superposées et agencées les unes par rapport aux autres selon une même orientation de manière à ce que leurs premiers bords de coupure bₕᵢ soient sensiblement alignés selon une direction sensiblement horizontale H et leurs deuxièmes bords de coupure bᵥᵢ soient décalés angulairement deux à deux d'un premier pas selon la direction sensiblement horizontale H.

Ainsi, lorsque toutes les nappes élémentaires sont allumées, chaque nappe lumineuse primaire présente également une forme globale en voile de navire avec un premier bord de coupure verticale (bᵥ₁ pour la nappe Fc_{L} et bᵥ₁' pour la nappe Fc_{R}), et un deuxième bord de coupure horizontale correspondant à la superposition des bords de coupure horizontale des nappes élémentaires la constituant.

En outre, chaque nappe élémentaire primaire 1 à 4 du premier faisceau lumineux Fc_{L} est positionnée selon une orientation inversée par rapport à une nappe élémentaire primaire 1' à 4' du deuxième faisceau lumineux Fc_{R} de manière à ce que leurs premiers bords de coupure soient sensiblement alignés selon la direction sensiblement horizontale H et leurs deuxièmes bords de coupure soient décalés angulairement deux à deux d'un deuxième pas inférieur au premier pas selon la direction sensiblement horizontale ;

Dans l'exemple, les nappes élémentaires 1 à 4 sont orientées vers la gauche alors que les nappes élémentaires 1 à 4' sont orientées vers la droite, les nappes élémentaires d'une même nappe lumineuse primaire sont décalées deux à deux angulairement d'un premier pas fixé à 3°, et les coupures verticales des couples de nappes (4, 1'), (3, 2'), (2, 3') et (1, 4') sont décalées d'un deuxième pas fixé à 1,5°, soit la moitié du premier pas.

Comme chaque nappe élémentaire primaire du premier et deuxième faisceaux lumineux Fc_{L}, Fc_{R} est produite par une source lumineuse distincte apte à être allumée ou éteinte de façon sélective, l'agencement précédent permet de discrétiser l'espace en neuf zones de taille angulaire minimum égale à 1,5°. En mode ADB, il est ainsi possible de créer une ou plusieurs zones sombres ZS délimitées chacune par deux bords de coupure verticale produits par chacun des faisceaux lumineux Fc_{L}, Fc_{R}. Le tableau 1 ci-après illustre à titre d'exemple par des croix les nappes élémentaires primaires qui doivent être éteintes pour obtenir neuf zones sombres de taille angulaire égale à ou multiples de 1,5° selon l'horizontale :

**Tableau 1**

| | PROJECTEUR GAUCHE | | | | PROJECTEUR DROIT | | | |
|---|---|---|---|---|---|---|---|---|
| | Nappe primaire | | | | Nappe primaire | | | |
| | 1 | 2 | 3 | 4 | 1' | 2' | 3' | 4' |
| Zone 1 | X | X | X | X | | | | |
| Zone 2 | X | X | X | | | | | |
| Zone 3 | X | X | X | | X | | | |
| Zone 4 | X | X | | | X | | | |
| Zone 5 | X | X | | | X | X | | |
| Zone 6 | X | | | | X | X | | |
| Zone 7 | X | | | | X | X | X | |
| Zone 8 | | | | | X | X | X | |
| Zone 9 | | | | | X | X | X | X |

Ainsi, la zone 2, obtenue lorsque les sources lumineuses associées aux nappes élémentaires 1, 2 et 3 sont éteintes, correspond à une bande sombre délimitée par
- les bords de coupure verticale bᵥ₄ et b_{v1'} des nappes 4 et 1' ;
- le bord de coupure Cwh horizontal du faisceau code (Figure la).

La taille des zones sombres peut donc varier par pas de 1,5°, et être déplacée pour suivre le mouvement du véhicule tiers VT détecté par la caméra 120.

Compte tenu de la forme en voile de navire des nappes élémentaires, les zones sombres ainsi créées ne viennent pas empiéter vers le bas dans le faisceau code lors du fonctionnement en ADB. Pour les mêmes raisons, on obtient, lorsque toutes les sources lumineuses sont allumées, un faisceau de type route homogène dans lequel aucune lumière trainant par terre n'est due aux faisceaux complémentaires.

Différents modes de réalisation peuvent être envisagés pour obtenir les nappes élémentaires en forme de voile de navire :
Ainsi, chaque nappe élémentaire peut être générée conformément aux principes enseignés par le document EP 2 436 968, par un dispositif d'émission de lumière comportant :
un réflecteur, de préférence de forme ellipsoïdale ;
une source de lumière, de préférence une diode électroluminescente ;
une surface de cache agencée pour créer une coupure de direction sensiblement verticale dans le faisceau lumineux généré par le dispositif d'émission de lumière;
une autre surface de cache agencée pour créer une coupure de direction sensiblement horizontale dans le faisceau lumineux généré par le dispositif d'émission de lumière;
un élément optique, typiquement une lentille, comprenant un premier foyer et/ou une première ligne focale situé à l'intersection des bords de coupure des deux caches, et recevant la lumière réfléchie par le réflecteur.

En variante, conformément au document EP 2 415 638, chaque nappe élémentaire peut être générée par une unité optique comportant :
- une source lumineuse, de préférence une diode électroluminescente, notamment un émetteur rectangulaire de lumière placé de préférence dans un plan sensiblement horizontal ;
- un réflecteur apte à produire les deux bords de coupures sensiblement orthogonaux par imagerie directe de la source lumineuse, c'est-à-dire par alignement des images de la source lumineuse formées en chaque point du réflecteur.

L'un des côtés de l'émetteur de lumière, par exemple le grand côté du rectangle est placé sensiblement parallèle à l'axe optique du réflecteur. Le réflecteur est de préférence composé de deux secteurs réfléchissants de forme géométrique différente:
- un premier secteur en forme de paraboloïde focalisé sur l'un des coins de l'émetteur rectangulaire et s'interrompant sur un plan comportant un bord de l'émetteur, ou encore de surface complexe ;
- un deuxième secteur de surface complexe, permettant de générer le bord de coupure horizontal.

Cette variante de réalisation permet d'obtenir des bords de coupure un peu moins nets que dans le cas du document EP 2 436 968, ce qui n'est pas gênant, voire souhaitable pour obtenir un meilleur fondu entre le faisceau code et le faisceau complémentaire.

Selon encore un troisième mode de réalisation préféré, chaque nappe élémentaire est produite à partir d'un dispositif optique 10 tel que celui représenté à la figure 3, et décrit en détails dans le document EP 2 597 360.

Ce dispositif 10 comporte une source lumineuse 11 avantageusement configurée pour émettre des rayons lumineux sensiblement vers le côté avec une direction moyenne orientée suivant un axe y dans le repère orthogonal illustré par exemple en figure 3. La source lumineuse 11 peut être constituée d'une ou plusieurs sources individuelles et plus particulièrement d'une ou plusieurs diodes électroluminescentes. Dans le cas d'une pluralité de diodes, il est avantageux de les positionner dans un même plan, orienté, de manière non limitative, suivant la verticale.

Dans le cas de l'exemple représenté, la source lumineuse 11 est constituée d'une seule LED, par exemple avec plusieurs éléments semiconducteurs, positionnée au niveau d'un premier foyer d'un réflecteur 12 de section horizontale sensiblement elliptique, transversalement au réflecteur et dans un plan vertical avec une orientation de sorte à ce que son émission soit dirigée vers le côté en regard du réflecteur. Dans le plan de la deuxième coupure, l'axe du réflecteur est plus particulièrement défini par la ligne des foyers géométriques situés sur le grand axe de l'ellipse dont une partie sert de génératrice pour construire le réflecteur. Pour une source lumineuse sous forme d'un émetteur rectangulaire de lumière, cet axe de réflecteur est en outre aligné avec un bord supérieur rectiligne et horizontal de l'émetteur. Le dispositif 10 comporte en outre une paroi de cache 13 avec une bordure 14 au niveau de laquelle une partie du flux lumineux réfléchie par le réflecteur 12 est interceptée, et un élément de projection du faisceau de sortie, ici sous forme d'une lentille 15. La paroi de cache 13, qui participe à la création du bord de coupure verticale grâce à sa bordure 14 est orientée suivant un plan vertical. Pour éviter les pertes, la paroi de cache 13 fait avantageusement office de plieuse et présente à cet effet une surface réfléchissante dans sa zone où de la lumière est réfléchie par le réflecteur 12. Les différents éléments sont agencés les uns par rapport aux autres de sorte à ce qu'une partie de la lumière émise arrive directement à l'élément de projection 15 via le réflecteur 12 et qu'une partie de la lumière y arrive indirectement, après réflexion seconde sur la paroi de cache 13. Pour y parvenir, la source lumineuse 11 est préférentiellement placée dans le plan de la paroi de cache 14 de sorte à être située en regard du réflecteur 12 et à émettre avec un rayon moyen perpendiculaire à la paroi de cache 13 et à l'axe optique de la lentille 15. Les rayons sortant de l'ensemble formé par la source lumineuse 11, le réflecteur 12 et la paroi de cache 13 entrent dans la lentille 15 par sa face arrière 16 et sortent en face avant 17. La lentille 15 coopère avec la paroi de cache 13 et le réflecteur 12 pour générer l'étalement souhaité du faisceau de sortie suivant le premier plan de coupure. La lentille 15 image à l'infini la bordure 14 qui est avantageusement placée dans le plan foyer objet de la lentille 15. Suivant l'autre plan de coupure, la lentille 15 est avantageusement dépourvue de puissance optique. En effet, le deuxième bord de coupure de la nappe élémentaire est produit par le réflecteur 12 dont la forme assure que les rayons qu'il réfléchit ne vont pas en-deçà du premier plan de coupure.

L'avantage de ce mode de réalisation réside notamment dans le fait que le bord de coupure horizontal obtenu peut être plus flou, et mieux se fondre dans sa superposition avec le faisceau de type code. Il en résulte une meilleure homogénéité du faisceau global. En outre, le fait que la paroi de cache 13 puisse servir de plieuse permet d'avoir un rendement lumineux global amélioré. Dans une variante, l'élément de projection sous forme de la lentille cylindrique 15 peut être remplacé par un réflecteur secondaire dont la surface est avantageusement celle d'une portion de cylindre parabolique d'axe vertical. Les rayons réfléchis par le réflecteur 12 sont réfléchis une nouvelle fois sur le réflecteur secondaire, ce qui permet d'avoir un axe d'émission de lumière en sortie du dispositif optique incliné.

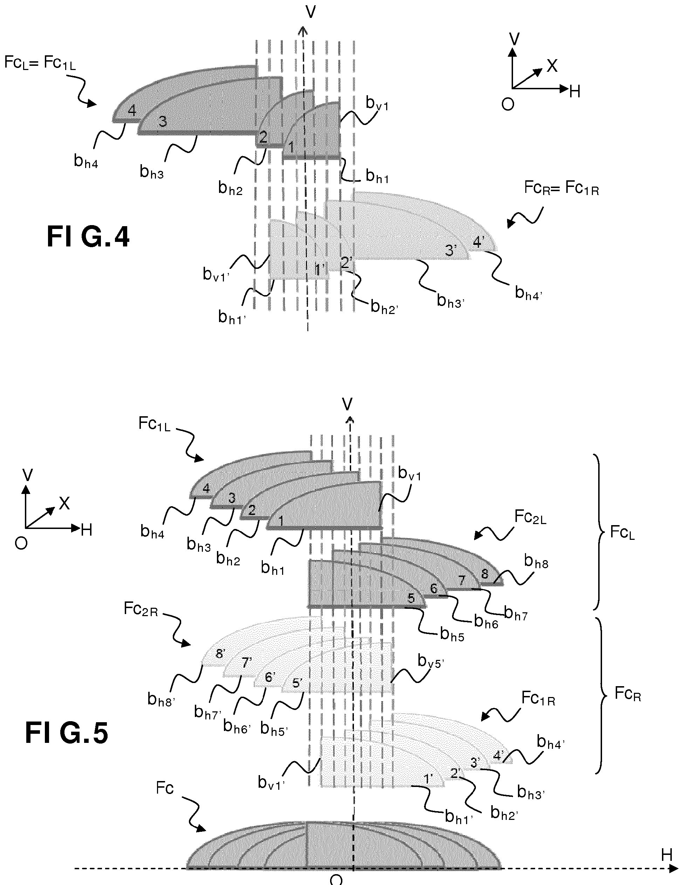

Dans le mode de réalisation de la figure 2, toutes les nappes élémentaires ont sensiblement la même taille. Dans une variante de réalisation représentée sur la figure 4, on prévoit avantageusement d'avoir des formes en voile de navire d'étendue horizontale variable selon la position de la nappe élémentaire par rapport à l'axe optique. Dans l'exemple représenté, la nappe primaire Fc_{1L} produite par le projecteur gauche est composée, comme dans le cas de la figure 2, de quatre nappes élémentaires numérotées de 1 à 4, avec sa coupure verticale la plus à droite correspondant au bord de coupure bᵥ₁ de la nappe élémentaire 1. Néanmoins, seules les nappes élémentaires 3 et 4, c'est-à-dire les deux nappes élémentaires dont les bords de coupure verticales sont les plus éloignés de la coupure verticale de la nappe primaire Fc_{1L} présentent une étendue angulaire identique, alors que les deux autres nappes élémentaires 1 et 2 ont une étendue plus étroite. Les longueurs des bords de coupure selon l'horizontale dépendent du nombre total de nappes élémentaires et de la valeur donnée au premier pas et sont choisies de manière à obtenir une étendue latérale suffisante. Les bords de coupure bₕ₃, bₕ₄ sont de préférence au moins deux fois plus longs que les bords de coupure bₕ₁, bₕ₂. L'intérêt de cette disparité entre largeurs de nappes élémentaires réside dans le fait qu'on obtient moins de variations dans la position du maximum d'intensité dans le faisceau global obtenu lorsque l'on effectue des extinctions sélectives des sources lumineuses pour passer d'une zone sombre à l'autre.

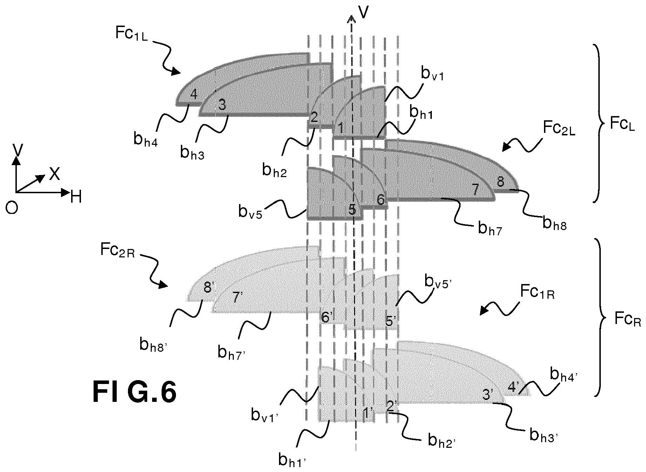

Les performances en termes d'homogénéité peuvent encore être améliorées grâce au deuxième mode de réalisation conforme à l'invention qui va à présent être décrit en référence aux figures 5 et 6.

En référence tout d'abord à la figure 5, et à l'instar de la figure 2, on a représenté les traces obtenues sur un plan P d'axes orthogonaux OV et OH, perpendiculaire à l'axe optique OX pour un premier faisceau lumineux complémentaire Fc_{L} généré au niveau du projecteur gauche 110_{L}, et pour un deuxième faisceau lumineux complémentaire Fc_{R} généré au niveau du projecteur droit 110_{R}. Ici encore, pour permettre une bonne compréhension de la constitution de ces traces, les différents éléments ont été volontairement décalés selon l'axe OV. En réalité, tous les éléments sont superposés suivant un même étalement vertical, de manière à créer un faisceau total Fc de part et d'autre d'un axe optique OX, dont la projection sur le plan P est représentée sur la dernière ligne de la figure 5.

On retrouve, avec les mêmes références que dans le cas de la figure 2, les deux faisceaux complémentaires Fc_{L} et Fc_{R} produisant chacun une nappe primaire Fc_{1L} et Fc_{1R}. La constitution de ses nappes primaires ainsi que leurs agencements respectifs sont, en tout point, identiques à ce qui a déjà été décrit en référence à la figure 2. Néanmoins, chacun de ces faisceaux complémentaires Fc_{L} et Fc_{R} produit en outre dans le plan P une nappe secondaire notée Fc_{2L} pour le projecteur gauche et Fc_{2R} pour le projecteur droit. Chaque nappe lumineuse secondaire Fc_{2L} (respectivement Fc_{2R}) est similaire à la nappe lumineuse primaire Fc_{1L} (respectivement Fc_{1R}), sauf en ce qui concerne l'orientation des nappes élémentaires dites secondaires qui est inversée par rapport à l'orientation selon laquelle les nappes élémentaires primaires, pour un même faisceau, s'étendent.

Ainsi, alors que les nappes élémentaires 1 à 4 pour le projecteur gauche s'étendent vers la gauche dans l'exemple, la nappe secondaire Fc_{2L} comporte quatre nappes élémentaires numérotées 5 à 8 qui s'étendent vers la droite. De même, alors que les nappes élémentaires 1' à 4' pour le projecteur droit s'étendent vers la droite dans l'exemple, la nappe secondaire Fc_{2R} comporte quatre nappes élémentaires numérotées 5' à 8' qui s'étendent vers la gauche.

En outre, chaque nappe élémentaire secondaire 5 à 8 du premier faisceau lumineux Fc_{L} est positionnée par rapport à une nappe élémentaire primaire 1 à 4 de ce même faisceau lumineux Fc_{L} de manière à ce que leurs premiers bords de coupure soient sensiblement alignés selon la direction sensiblement horizontale H et leurs deuxièmes bords de coupure soient sensiblement alignés selon une direction sensiblement verticale V. Ainsi, dans l'exemple, les bords de coupure verticales pour les couples de nappes élémentaires (4, 5), (3, 6), (2, 7) et (1, 8) sont deux à deux superposés.

De même, chaque nappe élémentaire secondaire 5' à 8' du deuxième faisceau lumineux Fc_{R} est positionnée par rapport à une nappe élémentaire primaire 1' à 4' de ce même faisceau lumineux Fc_{R} de manière à ce que leurs premiers bords de coupure soient sensiblement alignés selon la direction sensiblement horizontale H et leurs deuxièmes bords de coupure soient sensiblement alignés selon une direction sensiblement verticale V. Ainsi, dans l'exemple, les bords de coupure verticale pour les couples de nappes élémentaires (4', 5'), (3', 6'), (2', 7') et (1', 8') sont deux à deux superposés.

Comme chaque nappe élémentaire primaire et secondaire du premier et deuxième faisceaux lumineux Fc_{L}, Fc_{R} est produite par une source lumineuse distincte apte à être allumée ou éteinte de façon sélective, l'agencement précédent permet de discrétiser l'espace en neuf zones de taille angulaire minimum égale à 1,5°. En mode ADB, il est ainsi possible de créer une ou plusieurs zones sombres ZS délimitées chacune par deux bords de coupure verticale produits par chacun des faisceaux lumineux Fc_{L}, Fc_{R}. Le tableau 2 ci-après illustre à titre d'exemple par des croix les nappes élémentaires primaires et/ou secondaires qui doivent être éteintes pour obtenir neuf zones sombres de taille angulaire égale à ou multiples de 1,5° selon l'horizontale :

**Tableau 2**

| | PROJECTEUR GAUCHE | | | | | | | | PROJECTEUR DROIT | | | | | | | |
|---|---|---|---|---|---|---|---|---|---|---|---|---|---|---|---|---|
| | Nappe primaire | | | | Nappe secondaire | | | | Nappe primaire | | | | Nappe secondaire | | | |
| | 1 | 2 | 3 | 4 | 5 | 6 | 7 | 8 | 1' | 2' | 3' | 4' | 5' | 6' | 7' | 8' |
| Zone 1 | X | X | X | X | | | | | | | | | X | X | X | X |
| Zone 2 | X | X | X | | X | | | | | | | | X | X | X | X |
| Zone 3 | X | X | X | | X | | | | X | | | | X | X | X | |
| Zone 4 | X | X | | | X | X | | | X | | | | X | X | X | |
| Zone 5 | X | X | | | X | X | | | X | X | | | X | X | | |
| Zone 6 | X | | | | X | X | X | | X | X | | | X | X | | |
| Zone 7 | X | | | | X | X | X | | X | X | X | | X | | | |
| Zone 8 | | | | | X | X | X | X | X | X | X | | X | | | |
| Zone 9 | | | | | X | X | X | X | X | X | X | X | | | | |

La figure 6 illustre une variante de ce deuxième mode de réalisation, dans lequel les nappes élémentaires 1, 2, 5, 6 pour le premier faisceau complémentaire Fc_{L}, et 1', 2', 5', 6' pour le deuxième faisceau complémentaire Fc_{R} présentent une étendue angulaire moindre que l'ensemble des autres nappes élémentaires. Comme expliqué précédemment, le fait que les nappes élémentaires possèdent des largeurs croissantes lorsqu'on s'éloigne de la coupure verticale de la nappe élémentaire considérée permet d'obtenir une meilleure stabilité de la position du maximum d'intensité dans le faisceau global obtenu lorsque l'on effectue des extinctions sélectives des sources lumineuses pour passer d'une zone sombre à l'autre.

Dans les deux cas, en plus des avantages déjà indiqués ci-avant pour le premier mode de réalisation, on obtient une très bonne homogénéité du faisceau global, quelle que soit la distance par rapport au véhicule à laquelle on se place, du fait que le faisceau obtenu au niveau de chaque projecteur est lui-même très homogène.

De plus, à la différence du premier mode de réalisation, les zones sombres de tailles et de positions variables peuvent être obtenues à partir d'un seul projecteur, entre deux bords de coupure verticale. Certes, dans ce cas, l'étendue angulaire minimale est de 3°, mais le décalage de 1,5° entre les nappes élémentaires des deux projecteurs permet de doubler la résolution.

## Revendications

1. Système d'éclairage (100) pour véhicule automobile, comportant un premier projecteur (110L) apte à projeter un premier faisceau lumineux (Fc_{L}) et un deuxième projecteur (110_{R}) apte à projeter un deuxième faisceau lumineux (Fc_{R}), le premier et le deuxième faisceaux lumineux se combinant pour créer un faisceau total (Fc) de part et d'autre d'un axe optique (OX), ledit faisceau total (Fc) étant un faisceau complémentaire à un faisceau de feu de code pour une fonctionnalité de feu de route adaptatif et/ou une fonctionnalité de feu de route, tel que
- chaque premier et deuxième faisceaux (Fc_{L}, Fc_{R}) produit, dans un plan perpendiculaire (P) à l'axe optique (OX), au moins une nappe lumineuse primaire (Fc_{1L}, Fc_{1R});
- chaque nappe lumineuse primaire (Fc_{1L}, Fc_{1R}) comportant une pluralité de nappes élémentaires primaires (1-4, 1'-4')
, les nappes élémentaires primaires (1-4, 1'-4') étant **caractérisées en ce qu'**elles présentent chacune une forme en voile de navire avec un premier bord de coupure horizontal (bₕ₁-bₕ₄, b_{h1'}-b_{h4'}) et un deuxième bord de coupure (bᵥ₁, b_{v1'}), et s'étendant chacune majoritairement dans un quart de plan délimité par le premier et le deuxième bords de coupure ;
- le premier (bh1-bh4, bh1'-bh4') et le deuxième (bv1, bv1') bords de coupure de chaque nappe élémentaire primaire (1-4, 1'-4') formant un angle sensiblement compris entre 70° et 110°, de préférence un angle droit ;
- les nappes élémentaires primaires (1-4, 1'-4') d'une même nappe lumineuse primaire (Fc_{1L}, Fc_{1R}) étant en partie superposées et agencées les unes par rapport aux autres selon une même orientation de manière à ce que leurs premiers bords de coupure (bₕ₁-bₕ₄ ; b_{h1'}-b_{h4'}) soient sensiblement alignés selon une direction sensiblement horizontale (H) et leurs deuxièmes bords de coupure soient décalés angulairement deux à deux d'un premier pas selon ladite direction sensiblement horizontale (H);
- chaque nappe élémentaire primaire (1-4) du premier faisceau lumineux (Fc_{L}) étant positionnée selon une orientation inversée par rapport à une nappe élémentaire primaire (1'-4') du deuxième faisceau lumineux (Fc_{R}) de manière à ce que :
∘ les premiers bords de coupure des nappes élémentaires primaires (1-4) du premier faisceau lumineux (Fc_{L}) et des nappes élémentaires primaires (1'-4') du deuxième faisceau lumineux (Fc_{R}) soient sensiblement alignés selon ladite direction sensiblement horizontale (H) et les deuxièmes bords de coupure des nappes élémentaires primaires (1-4, 1'-4') du premier faisceau lumineux (Fc_{L}) et du deuxième faisceau lumineux (Fc_{R}) soient décalés angulairement deux à deux d'un deuxième pas inférieur au premier pas selon ladite direction sensiblement horizontale, et
∘ la nappe lumineuse primaire (Fc_{1L}) du premier faisceau (Fc_{L}) s'étende majoritairement d'un premier côté de l'axe optique et la nappe lumineuse primaire (Fc_{1R}) du deuxième faisceau (Fc_{R}) s'étende majoritairement d'un deuxième côté de l'axe optique ;
- chaque nappe élémentaire primaire du premier et deuxième faisceaux lumineux (Fc_{L}, Fc_{R}) étant générée par une source lumineuse apte à être allumée ou éteinte de façon sélective.

2. Système d'éclairage selon la revendication 1, **caractérisé en ce que** chaque premier et deuxième faisceaux lumineux (Fc_{L}, Fc_{R}) produit en outre, dans le plan (P) perpendiculaire à l'axe optique (OX), une nappe lumineuse secondaire (FC2L, FC2R) similaire à la nappe lumineuse primaire (Fc_{1L}, Fc_{1R}), mais dont les nappes élémentaires secondaires (5-8, 5'-8') s'étendent, pour un même faisceau, selon une orientation opposée à celle de la nappe lumineuse primaire (Fc_{1L}, Fc_{1R}).

3. Système d'éclairage selon la revendication 2, **caractérisé en ce que** chaque nappe élémentaire secondaire (5-8, 5'-8') du premier, respectivement deuxième, faisceau lumineux (Fc_{L}, Fc_{R}) est positionnée selon une orientation inversée par rapport à une nappe élémentaire primaire (1-4, 1'-4') du premier, respectivement deuxième, faisceau lumineux (Fc_{L}, Fc_{R}) de manière à ce que leurs premiers bords de coupure soient sensiblement alignés selon ladite direction sensiblement horizontale (H) et leurs deuxièmes bords de coupure soient sensiblement alignés selon une direction sensiblement verticale (V).

4. Système d'éclairage selon l'une quelconque des revendications précédentes, **caractérisé en ce que** le deuxième pas est sensiblement égal à la moitié du premier pas.

5. Système d'éclairage selon l'une quelconque des revendications précédentes, **caractérisé en ce que** le premier pas est fixé à environ 3 degrés.

6. Système d'éclairage selon l'une quelconque des revendications précédentes, **caractérisé en ce que** chaque nappe élémentaire est produite par un dispositif optique (10) comprenant:
- un réflecteur (12) agencé pour générer un faisceau lumineux réfléchi à partir des rayons lumineux issus de la source lumineuse (11) associée à la nappe élémentaire,
- une paroi de cache (13) pourvue d'une bordure (14) située sur le chemin du faisceau lumineux réfléchi et configurée pour former le deuxième bord de coupure,
le réflecteur (12) étant agencé pour générer le premier bord de coupure.

7. Système d'éclairage selon la revendication 6, **caractérisé en ce que** la paroi de cache (13) est réfléchissante.

8. Système d'éclairage selon l'une quelconque des revendications 6 ou 7, **caractérisé en ce que** le réflecteur (12) présente une section horizontale sensiblement elliptique, et **en ce que** la source lumineuse (11) associée est placée dans le plan de la paroi de cache (13) au niveau d'un premier foyer de la section horizontale sensiblement elliptique.

9. Système d'éclairage selon l'une quelconque des revendications précédentes, **caractérisé en ce que** les nappes élémentaires d'une même nappe lumineuse ont sensiblement la même taille.

10. Système d'éclairage selon l'une quelconque des revendications 1 à 8, **caractérisé en ce que** les nappes élémentaires d'une même nappe lumineuse ont, selon la direction horizontale, une étendue angulaire variable en fonction de leur position dans la nappe lumineuse.

11. Système d'éclairage selon la revendication 10, **caractérisé en ce que** l'étendue angulaire des nappes élémentaires d'une même nappe lumineuse croît avec la distance séparant le premier bord de coupure verticale associé à chaque nappe élémentaire et le bord de coupure verticale de ladite même nappe lumineuse lorsque toutes les sources lumineuses associées sont allumées.

12. Système d'éclairage selon l'une quelconque des revendications précédentes, **caractérisé en ce que** le faisceau total (Fc) produit est un faisceau complémentaire d'un faisceau à coupure pour donner un faisceau route.

13. Système d'éclairage selon l'une quelconque des revendications précédentes, **caractérisé en ce que** les sources lumineuses sont des diodes électroluminescentes.

## Patentansprüche

1. Beleuchtungssystem (100) für Kraftfahrzeug, das einen ersten Scheinwerfer (110_{L}), der ein erstes Lichtstrahlenbündel (Fc_{L}) abstrahlen kann, und einen zweiten Scheinwerfer (110_{R}), der ein zweites Lichtstrahlenbündel (Fc_{R}) abstrahlen kann, umfasst, wobei sich das erste und das zweite Lichtstrahlenbündel vereinigen, um beiderseits einer optischen Achse (OX) ein Gesamtstrahlenbündel (Fc) zu erzeugen, wobei das Gesamtstrahlenbündel (Fc) ein Strahlenbündel ist, das für eine Funktionalität für adaptives Fernlicht und/oder eine Funktionalität für Fernlicht zu einem Abblendlicht-Strahlenbündel komplementär ist, derart, dass
- jedes erste und jedes zweite Strahlenbündel (Fc_{L}, Fc_{R}) in einer Ebene (P) senkrecht zu der optischen Achse (OX) wenigstens ein primäres Lichtbündel (Fc_{1L}, Fc_{1R}) erzeugt;
- jedes primäre Lichtbündel (Fc_{1L}, Fc_{1R}) mehrere primäre Elementarbündel (1-4, 1'-4') enthält, wobei die primären Elementarbündel (1-4, 1'-4') **dadurch gekennzeichnet sind, dass** sie jeweils die Form eines Schiffssegels mit einer ersten horizontalen Kappungskante (bₕ₁-bₕ₄, b_{h1'}-b_{h4'}) und einer zweiten Kappungskante (bᵥ₁, b_{v1'}) haben und sich jeweils hauptsächlich in einem Quadranten der Ebene erstrecken, der durch die erste und die zweite Kappungskante begrenzt ist;
- wobei die erste Kappungskante (bₕ₁-bₕ₄, b_{h1'}-b_{h4'}) und die zweite Kappungskante (bᵥ₁, b_{v1'}) jedes Elementarbündels (1-4, 1'-4') einen Winkel bilden, der im Wesentlichen zwischen 70° und 110° liegt und vorzugsweise ein rechter Winkel ist;
- wobei die primären Elementarbündel (1-4, 1'-4') desselben primären Lichtbündels (Fc_{1L}, Fc_{1R}) teilweise überlagert sind und relativ zueinander in derselben Orientierung angeordnet sind, derart, dass ihre ersten Kappungskanten (bₕ₁-bₕ₄, b_{h1'}-b_{h4'}) im Wesentlichen auf eine im Wesentlichen horizontale Richtung (H) ausgerichtet sind und ihre zweiten Kappungskanten in Winkelrichtung paarweise um eine erste Schrittweite in der im Wesentlichen horizontalen Richtung (H) versetzt sind;
- wobei jedes primäre Elementarbündel (1-4) des ersten Lichtstrahlenbündels (Fc_{L}) in einer zu dem primären Elementarbündel (1'-4') des zweiten Lichtstrahlenbündels (Fc_{R}) umgekehrten Orientierung positioniert ist, derart, dass:
• die ersten Kappungskanten der primären Elementarbündel (1-4) des ersten Lichtstrahlenbündels (Fc_{L}) und der primären Elementarbündel (1'-4') des zweiten Lichtstrahlenbündels (Fc_{R}) im Wesentlichen auf die im Wesentlichen horizontale Richtung (H) ausgerichtet sind und die zweiten Kappungskanten der primären Elementarbündel (1-4, 1'-4') des ersten Lichtstrahlenbündels (Fc_{L}) und des zweiten Lichtstrahlenbündels (Fc_{R}) in Winkelrichtung paarweise um eine zweite Schrittweite, die kleiner als die erste Schrittweite ist, in der im Wesentlichen horizontalen Richtung versetzt sind, und
• das primäre Lichtbündel (Fc_{1L}) des ersten Strahlenbündels (Fc_{L}) sich hauptsächlich von einer ersten Seite der optischen Achse erstreckt und das primäre Lichtbündel (Fc_{1R}) des zweiten Strahlenbündels (Fc_{R}) sich hauptsächlich von einer zweiten Seite der optischen Achse erstreckt;
- jedes primäre Elementarbündel des ersten und des zweiten Lichtstrahlenbündels (Fc_{L}, Fc_{R}) durch eine Lichtquelle erzeugt wird, die wahlweise eingeschaltet oder ausgeschaltet werden kann.

2. Beleuchtungssystem nach Anspruch 1, **dadurch gekennzeichnet, dass** jedes erste und jedes zweite Lichtstrahlenbündel (Fc_{L}, Fc_{R}) außerdem in der Ebene (P) senkrecht zu der optischen Achse (OX) ein sekundäres Lichtbündel (Fc_{2L}, Fc_{2R}) erzeugt, das zu dem primären Lichtbündel (Fc_{1L}, Fc_{1R}) ähnlich ist, dessen sekundäre Elementarbündel (5-8, 5'-8') sich jedoch für dasselbe Strahlenbündel in einer Orientierung entgegengesetzt zu jener des primären Lichtbündels (Fc_{1L}, Fc_{1R}) erstrecken.

3. Beleuchtungssystem nach Anspruch 2, **dadurch gekennzeichnet, dass** jedes zweite Elementarbündel (5-8, 5'-8') des ersten bzw. des zweiten Lichtstrahlenbündels (Fc_{L}, Fc_{R}) in einer zu dem primären elementaren Bündel (1-4, 1'-4') des ersten bzw. des zweiten Lichtstrahlenbündels (Fc_{L}, Fc_{R}) umgekehrten Orientierung positioniert ist, derart, dass ihre ersten Kappungskanten im Wesentlichen auf die im Wesentlichen horizontale Richtung (H) ausgerichtet sind und ihre zweiten Kappungskanten im Wesentlichen auf eine im Wesentlichen vertikale Richtung (V) ausgerichtet sind.

4. Beleuchtungssystem nach einem der vorhergehenden Ansprüche, **dadurch gekennzeichnet, dass** die zweite Schrittweite im Wesentlichen gleich der Hälfte der ersten Schrittweite ist.

5. Beleuchtungssystem nach einem der vorhergehenden Ansprüche, **dadurch gekennzeichnet, dass** die erste Schrittweite auf etwa 3 Grad festgelegt ist.

6. Beleuchtungssystem nach einem der vorhergehenden Ansprüche, **dadurch gekennzeichnet, dass** jedes Elementarbündel durch eine optische Vorrichtung (10) erzeugt wird, die Folgendes umfasst:
- einen Reflektor (12), der dafür ausgelegt ist, ein reflektiertes Lichtstrahlenbündel aus zwei Lichtstrahlen, die von der dem Elementarbündel zugeordneten Lichtquelle (11) stammen, zu erzeugen, und
- eine Abdeckwand (13), die einen Rand (14) aufweist, der sich in dem Weg des reflektierten Lichtstrahlenbündels befindet und konfiguriert ist, die zweite Kappungskante zu bilden,
wobei der Reflektor (12) dafür ausgelegt ist, die erste Kappungskante zu erzeugen.

7. Beleuchtungssystem nach Anspruch 6, **dadurch gekennzeichnet, dass** die Abdeckwand (13) reflektierend ist.

8. Beleuchtungssystem nach einem der Ansprüche 6 oder 7, **dadurch gekennzeichnet, dass** der Reflektor (12) einen im Wesentlichen elliptischen horizontalen Querschnitt aufweist und das die zugeordnete Lichtquelle (11) in der Ebene der Abdeckwand (13) auf Höhe eines ersten Brennpunkts des im Wesentlichen elliptischen horizontalen Querschnitts angeordnet ist.

9. Beleuchtungssystem nach einem der vorhergehenden Ansprüche, **dadurch gekennzeichnet, dass** die Elementarbündel des ersten Lichtbündels im Wesentlichen die gleiche Größe haben.

10. Beleuchtungssystem nach einem der Ansprüche 1 bis 8, **dadurch gekennzeichnet, dass** die Elementarbündel desselben Lichtbündels in der horizontalen Richtung eine veränderliche Winkelausdehnung haben, die von ihrer Position in dem Lichtbündel abhängt.

11. Beleuchtungssystem nach Anspruch 10, **dadurch gekennzeichnet, dass** die Winkelausdehnung der Elementarbündel desselben Lichtbündels mit dem Abstand zunimmt, der die erste vertikale Kappungskante, die jedem Elementarbündel zugeordnet ist, von der vertikalen Kappungskante desselben Lichtbündels, wenn alle zugeordneten Lichtquellen eingeschaltet sind, trennt.

12. Beleuchtungssystem nach einem der vorhergehenden Ansprüche, **dadurch gekennzeichnet, dass** das Gesamtstrahlenbündel (Fc) ein komplementäres Strahlenbündel eines Strahlenbündels mit Kappung erzeugt, um ein Fernlichtstrahlenbündel zu ergeben.

13. Beleuchtungssystem nach einem der vorhergehenden Ansprüche, **dadurch gekennzeichnet, dass** die Lichtquellen Leuchtdioden sind.

## Claims

1. A lighting system (100), notably for a motor vehicle, comprising a first projector (110_{L}) capable of projecting a first light beam (Fc_{L}) and a second projector (110_{R}) capable of projecting a second light beam (Fc_{R}), the first and second light beams being combined with each other to create a total beam (Fc) on either side of an optical axis (OX), said total beam (Fc) being a beam complementary to a cut-off beam to provide an adaptive driving high-beam and/or a high-beam, such as
- each first and second beam (Fc_{L}, Fc_{R}) produces, in a plane (P) perpendicular to the optical axis (OX), at least one primary light bundle (Fc_{1L}, Fc_{1R}) ;
- each primary light bundle (Fc_{1L}, Fc_{1R}) comprising a plurality of primary elementary bundles (1-4, 1'-4'),
the plurality of primary elementary bundles (1-4, 1'-4') being **characterized in that** they each comprises a "ship's sail" form with a first (bₕ₁-bₕ₄, b_{h1'}-b_{h4'}) and a second (bᵥ₁, b_{v1'}) cut-off edge, and each extending for the most part in a quarter plane delimited by the first and the second cut-off edges;
- the first (bₕ₁-bₕ₄, b_{h1'}-b_{h4'}) and second (bᵥ₁, b_{v1'}) cut-off edges of each primary elementary bundle (1-4, 1'-4') forming an angle substantially in the range from 70° to 110°, preferably a right angle.
- the primary elementary bundles (1-4, 1'-4') of the same primary light bundle (Fc_{1L}, Fc_{1R}) being partially overlapped and arranged with respect to one another in the same orientation, so that their first cut-off edges (bₕ₁-bₕ₄ ; b_{h1'}-b_{h4'}) are substantially aligned along a substantially horizontal direction (H) and their second cut-off edges are offset angularly in pairs by a first interval along said substantially horizontal direction (H);
- each primary elementary bundle (1-4) of the first light beam (Fc_{L}) being positioned in an inverted orientation relative to a primary elementary bundle (1'-4') of the second light beam (Fc_{R}), so that
∘ the first cut-off edges of the primary elementary bundles (1-4) of the first light beam (Fc_{L}) and of the primary elementary bundles (1'-4') of the second light beam (Fc_{R}) are substantially aligned along said substantially horizontal direction (H), and the second cut-off edges of the primary elementary bundles (1-4, 1'-4') of the first light beam (Fc_{L}) and of the second light beam (Fc_{R}) are offset angularly in pairs by a second interval, smaller than the first interval, along said substantially horizontal direction;
∘ the primary light bundle (Fc_{1L}) of the first beam (Fc_{L}) extends for the most part on a first side of the optical axis, and the primary light bundle (Fc_{1R}) of the second beam (Fc_{R}) extends for the most part on a second side of the optical axis opposite the first side
- each primary elementary bundle of the first and second light beams (Fc_{L}, Fc_{R}) being generated by a light source which can be switched on or off selectively.

2. The lighting system as claimed in claim 1, **characterized in that** each first and second light beam (Fc_{L}, Fc_{R}) also produces, in the plane (P) perpendicular to the optical axis (OX), a secondary light bundle (Fc_{2L}, Fc_{2R}) similar to the primary light bundle (Fc_{1L}, Fc_{1R}), but having secondary elementary bundles (5-8, 5'-8') which extend, in the same beam, in an orientation opposed to that of the primary light bundle (Fc_{1L}, Fc_{1R}).

3. The lighting system as claimed in claim 2, **characterized in that** each secondary elementary bundle (5-8, 5'-8') of the first and second light beam (Fc_{L}, Fc_{R}) respectively is preferably positioned in an inverted orientation relative to a primary elementary bundle (1-4, 1'-4') of the first and second light beam (Fc_{L}, Fc_{R}) respectively, so that their first cut-off edges are substantially aligned along said substantially horizontal direction (H), and their second cut-off edges are substantially aligned along a substantially vertical direction (V).

4. The lighting system as claimed in any of the preceding claims, **characterized in that** the second interval is substantially equal to half of the first interval.

5. The lighting system as claimed in any of the preceding claims, **characterized in that** the first interval is set at about 3 degrees.

6. The lighting system as claimed in any of the preceding claims, **characterized in that** each elementary bundle is produced by an optical device (10) comprising:
- a reflector (12) arranged to generate a reflected light beam based on light rays emitted by the light source (11) associated with the elementary bundle,
- a shield wall (13) having a boundary (14) located on the path of the reflected light beam and configured to form the second cut-off edge,
the reflector (12) being arranged to generate the first cut-off edge.

7. The lighting system as claimed in claim 6, **characterized in that** the shield wall (13) is reflective.

8. The lighting system as claimed in either of claims 6 and 7, **characterized in that** the reflector (12) has a substantially elliptical horizontal cross section, and **in that** the associated light source (11) is placed in the plane of the shield wall (13) at a first focus of the substantially elliptical horizontal cross section.

9. The lighting system as claimed in any of the preceding claims, **characterized in that** the elementary bundles of the same light bundle are of substantially the same size.

10. The lighting system as claimed in any of claims 1 to 8, **characterized in that** the elementary bundles of the same light bundle have an angular extension, in the horizontal direction, which is variable according to their position in the light bundle.

11. The lighting system as claimed in claim 10, **characterized in that** the angular extension of the elementary bundles of the same light bundle increases with the distance between the first vertical cut-off edge associated with each elementary bundle and the vertical cut-off edge of the same said light bundle when all the associated light sources are switched on.

12. The lighting system as claimed in any of the preceding claims, **characterized in that** the total beam produced (Fc) is a beam complementary to a cut-off beam to provide a high beam.

13. The lighting system as claimed in any of the preceding claims, **characterized in that** the light sources are light-emitting diodes.
